(19)

**Europäisches Patentamt**

**European Patent Office**

**Office européen des brevets**

(11) **EP 1 063 142 A1**

(12) **EUROPÄISCHE PATENTANMELDUNG**

(43) Veröffentlichungstag:
    **27.12.2000 Patentblatt 2000/52**

(51) Int. Cl.⁷: **B61D 47/00**, B60P 1/64,
    B65G 67/02

(21) Anmeldenummer: **00112342.1**

(22) Anmeldetag: **09.06.2000**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **23.06.1999 DE 19928433**

(71) Anmelder: **DaimlerChrysler AG
    70546 Stuttgart (DE)**

(72) Erfinder:
    • **Weidemann, Hans-Jürgen, Dr.
      67346 Speyer (DE)**
    • **Baier, Michael, Dipl.-Ing.
      68309 Mannheim (DE)**
    • **Thiele, Bernd
      42329 Wuppertal (DE)**

(74) Vertreter:
    **Luderschmidt, Schüler & Partner GbR
    Patentanwälte,
    John-F.-Kennedy-Strasse 4
    65189 Wiesbaden (DE)**

(54) **Verfahren zur Positionierung einer Hublafette unter einem Trailer und Trailer**

(57) Es wird ein Verfahren zur Positionierung einer Hublafette unter einem Trailer vorgeschlagen. Zur Erkennung der aktuellen horizontalen Position der Hublafette (10) relativ zum Trailer (1) wird der zeitliche Verlauf des vertikalen Abstandes zwischen mindestens einem auf der Hublafette montierten, waagerecht selektiert abtastenden Abstandssensor (13, 14) und dem nach unten gerichteten Außenflächenprofil des Trailers oder einer die untere Traileraußenfläche definierenden Vorrichtung unter Beachtung der bekannten Dimensionierung des Außenflächenprofils sowie der aktuellen Geschwindigkeit der Hublafette (10) herangezogen.

Des weiteren wird ein Trailer oder eine die untere Traileraußenfläche definierende Vorrichtung für den kombinierten Verkehr von Schienenwaggons und LKW-Anhängern vorgeschlagen. Das nach unten gerichtete Außenflächenprofil des Trailers oder eine die untere Raileraußenfläche definierende Vorrichtung ist zumindest teilweise mit signifikanten Erhebungen und/oder Nuten versehen, welche durch unterschiedliche vertikale Profilierung eine Erkennung der horizontalen Position sowie trailerspezifischer Informationen einer unter dem Trailer zu positionierenden Hublafette (10) relativ zum Trailer (1) ermöglicht.

Fig. 1

EP 1 063 142 A1

**Beschreibung**

Die Erfindung bezieht sich auf ein Verfahren zur Positionierung einer Hublafette unter einem Trauer gemäß dem Oberbegriff des Anspruchs 1 und auf einen Trailer gemäß dem Oberbegriff des Anspruchs 4.

Beim kombinierten Verkehr von Schienenwaggons und LKW-Anhängern werden fahrbare Hublafetten für die automatisierte Verladung von Trailern eingesetzt. Diese Hublafetten heben mit Hilfe ihrer Hubvorrichtung den auf dem Bahnsteig abgestellten Trailer an, transportieren ihn zum Schienenwaggon und setzen ihn dort wieder ab. In gleicher Weise bewerkstelligen die Hublafetten den umgekehrten Transportvorgang vom Schienenwaggon zum Bahnsteig.

Zum Be- und Entladen der LKW ist eine relative Positionierung der Hublafetten in Bezug auf die Trailer am Bahnsteig notwendig. Insbesondere ist es dabei von Wichtigkeit, daß eine Hublafette derart unter einen Trailer führt (Unterfahrt), daß sich die zur Lastaufnahme vorgesehene Traverse der Hublafette relativ exakt unterhalb der Mitte des Trailers befindet, worauf die Hubvorrichtung der Lafette betätigt werden kann.

Es existieren eine Reihe verschiedener allgemein bekannter Sensorik-Grundprinzipien, mit denen eine Lage- bzw. Abstandsmessung zu stehenden Objekten möglich ist. Zu diesen Sensorik-Grundprinzipien zählen das Ultraschall-Laufzeit-Verfahren, das Abstandsmeßverfahren auf Basis von Funk-Wellen, das Mikrowellen-Radar, das optische (Laser-) Triangulations-Verfahren, optoelektronische Verfahren auf Basis von (Laser-) Phasenmessungen und mechanische Verfahren (Druck/Kontakt-Schalter, Anschlagschalter).

Diese Verfahren liefern der Steuerung der Hublafette mit Hilfe einer entsprechenden Elektronik einen Wert für den Abstand desjenigen Gegenstandes, welcher in Strahlrichtung der aktuellen Messung liegt. Das mechanische Verfahren liefert den Zeitpunkt des Kontaktes (Abstand gleich Null) der Hublafette an einem bestimmten Ort des Trailers.

Die dabei zu erzielenden Informationen sind für die Positionierung der Hublafetten unterhalb der Trailer in der Mitte der Trailer nicht ausreichend, da im allgemeinen allein aus der Angabe des Abstandes keine eindeutige Information darüber vorliegt, zu welcher Teilfläche des Gegenstandes (Trailer) dieser Abstand gemessen wird. Eine exakte Positionierung der Hublafetten unter den Trailern ist somit nicht zuverlässig zu bewerkstelligen. Es ist für die Steuerung der Hublafetten durch keine weitere Information zuverlässig ersichtlich, ob die vorliegende Abstandsmessung durch eines der vorstehend genannten Verfahren auch tatsächlich der zu erfassende aktuelle Abstand zu einem Trailer ist. Eine Identifikation des Trailers ist nicht möglich, da auch feste Oberflächen von anderen Gegenständen oder von Personen entsprechende Echos erzeugen und der Steuerung entsprechende Abstandswerte liefern.

Der Erfindung liegt die Aufgabe zugrunde, ein Verfahren zur Positionierung einer Hublafette unter einem Trailer anzugeben, das in sehr zuverlässiger Art und Weise den zu erfassenden aktuellen Abstand bzw. die momentane Lage liefert und derart die automatische Positionierung der Hublafette in einem engen Toleranzbereich ermöglicht.

Des weiteren soll ein Trailer angegeben werden, der eine Positionserkennung einer unter den Trailer fahrenden Hublafette in einfacher Weise ermöglicht.

Diese Aufgabe wird bezüglich des Verfahrens in Verbindung mit den Merkmalen des Oberbegriffes erfindungsgemäß durch die im Kennzeichen des Anspruchs 1 angegebenen Merkmale gelöst.

Die Aufgabe wird bezüglich des Trailers in Verbindung mit den Merkmalen des Oberbegriffes erfindungsgemäß durch die im Kennzeichen des Anspruchs 4 angegebenen Merkmale gelöst.

Die mit der Erfindung erzielbaren Vorteile bestehen insbesondere darin, daß das vorgeschlagene Verfahren eine automatische Positionierung einer Hublafette unterhalb eines Trailers mit sehr hoher Genauigkeit ermöglicht - sowohl quer als auch längs zur Längsachse des Trailers. Durch die konstante Auslesung des vertikalen Abstandes entsteht ein „räumliches Abbild" des nach unten gerichteten Außenflächenprofils des Trailers, so daß nicht eine einzige Abstandsmessung, sondern das erfaßte „räumliche Abbild" für die Positionierung herangezogen wird. Dementsprechend werden Fehlmessungen (Fehlechos) erkannt und können unterdrückt werden.

Vorteilhafte Ausgestaltungen der Erfindung sind in den Unteransprüchen gekennzeichnet.

Weitere Vorteile des vorgeschlagenen Verfahrens bzw. des vorgeschlagenen Trailers ergeben sich aus der nachstehenden Beschreibung.

Die Erfindung wird nachstehend anhand der in der Zeichnung dargestellten Ausführungsbeispiele näher erläutert. Es zeigen:

Fig. 1    eine Gesamtansicht mit Schienenwaggon, Hublafette und Trailer,

Fig. 2    eine Unterfahrt der Hublafette,

Fig. 3    die zeitliche Abhängigkeit des erfaßten Höhensignals.

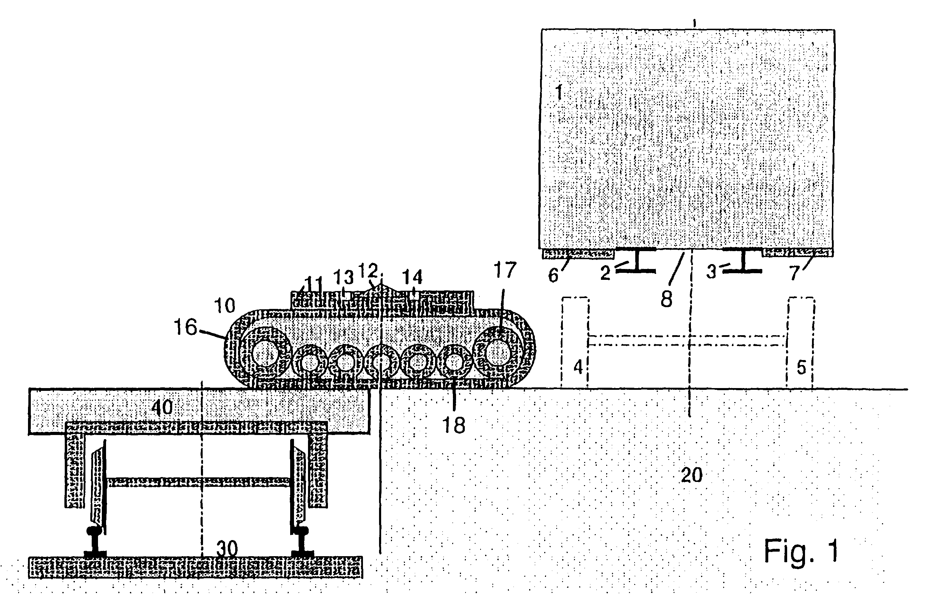

In Fig. 1 ist eine Gesamtansicht mit Schienenwaggon, Hublafette und Trailer dargestellt. Es ist ein auf dem Bahnsteig abgestellter Trailer 1 zu erkennen, wobei für die nachstehenden Erläuterungen die genaue Ausbildung der Unterseite des Trailers 1 von Interesse ist. Es sind Reifen 4, 5 einer Achse des Trailers gestrichelt angedeutet. Die Unterseite des Trailers 1 untergliedert sich in fünf hinsichtlich ihres Höhenprofils klar voneinander unterscheidbare Abschnitte, nämlich eine erste randseitige untere Außenfläche 6 des Trailers, einen ersten Längsträger 2, eine mittlere untere Außenfläche 8 des Trailers, einen zweiten Längsträger 3 und eine zweite randseitige untere Außenfläche 7 des Trailers. Der Trailer kann zur Definition eines solchen Höhenprofils auch mit einer ein- oder mehrstückigen Zusatzeinrichtung versehen sein, die eine definierte Kontur vorgibt.

Eine Hublafette 10 befindet sich mit ihren Ketten 16 - angetrieben über Kettenräder 17 und abgestützt über Tragräder 18 - zum Teil auf dem den LKW tragenden befahrbaren Grund 20 (Fahrbahn, Bahnsteig) und zum Teil auf einem Schienenwaggon 40, welcher auf einer Schienenanlage 30 ruht. Trailer und Schienenwaggon 40 sind zueinander parallel angeordnet, so daß sich die Hublafette 10 in einfacher Weise rechtwinklig bezüglich der beiden Fahrzeuge bewegen kann, um derart den Trailer 1 vom Bahnsteig auf den Schienenwaggon zu transportieren.

Es besteht die Aufgabe, die Hublafette 10 derart unterhalb des Trailers 1 zu positionieren, daß sich ein zentraler Hubzylinder 12 der Hublafette unter der Mittelachse des Trailers befindet, so daß eine Traverse 11 der Hublafette 10 unterhalb der beiden Längsträger 2, 3 angeordnet ist. Nach erfolgter exakter Positionierung wird die Hublafette gestoppt. Anschließend kann der Hubzylinder 12 beaufschlagt werden, um den Trailer 1 anzuheben und zum Schienenwaggon 40 zu transportieren. Zur exakten Positionierung der Hublafette 10 dienen zwei Abstandssensoren 13, 14, welche zu beiden Seiten des Hubzylinders 12 angeordnet sind. Diese Abstandssensoren 13, 14 können dabei nach optischen Meßprinzipien oder Ultraschall-Meßprinzipien arbeiten.

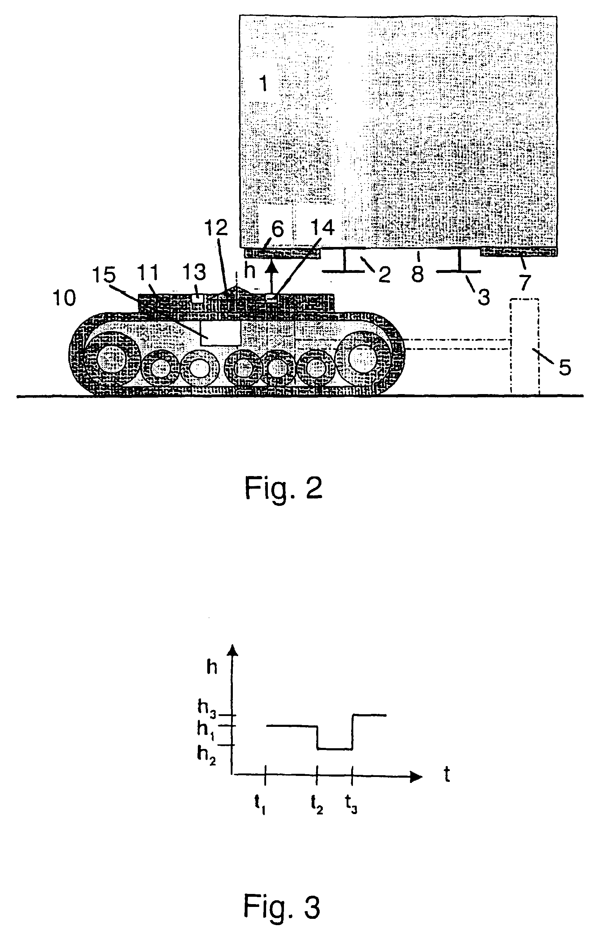

In Fig. 2 ist eine Unterfahrt der Hublafette dargestellt. Mit einem Pfeil ist das vom Abstandssensor 14 erfaßte und einer Meßwertverarbeitung 15 zugeleitete Höhensignal h bezeichnet. Der Trailer ist hier rechts vom Schienenwaggon abgestellt.

In Fig. 3 ist die zeitliche Abhängigkeit des während einer Unterfahrt der Hublafette erfaßten Höhensignals h dargestellt. Zu einem Zeitpunkt $t_1$ erfaßt der Abstandssensor 14 ein Höhensignal $h_1$ entsprechend dem Abstand zwischen dem Abstandssensor und der randseitigen unteren Außenfläche 6 des Trailers 1 oder der Unterflächenkonturdefiniereinrichtung. Das Höhensignal h bleibt in einem ersten Zeitraum zwischen $t_1$ und $t_2$ konstant auf dem Wert $h_1$. In einem sich anschließenden zweiten Zeitraum zwischen $t_2$ und $t_3$ verringert sich das Höhensignal h auf den Wert $h_2$ entsprechend dem Abstand zwischen dem Abstandssensor und der Unterfläche des Längsträgers 2. In einem dritten Zeitraum ab dem Zeitpunkt $t_3$ erhöht sich das Höhensignal h auf den Wert $h_3$ entsprechend dem Abstand zwischen dem Abstandssensor und der mittleren unteren Außenfläche 8 des Trailers 1. Bei einer Fahrt unter einen vom Schienenwaggon abgestellten Trailer kommt der Abstandsensor 13 zunächst in Einsatz und erzeugt ein vergleichbares Höhenprofil.

Aus den vorstehenden Erläuterungen ergibt sich, daß sich durch die verschiedenen Höhen (Höhenprofil) der zur Unterfahrt der Hublafette und zum Anhub des Trailers vorgesehenen Flächen, d. h. der Außenfläche 6 bzw. Unterflächenkonturdefiniervorrichtung, des Längsträgers 2 und der Außenfläche 8, ein prinzipieller und typischer Zeitverlauf des Höhensignals h ergibt, die ebenfalls durch eine Definiereinrichtung bestimmt sein kann. Für die erwarteten Höhensignale $h_1$, $h_2$, $h_3$ existieren deshalb Erwartungswerte, für die man aufgrund der engen Toleranzen und Normen der Trailer-Konstruktionen Mittelwerte und Bandbreiten angeben kann. Mit anderen Worten wird ab dem Zeitpunkt $t_1$, ab dem sich der Abstandssensor 14 unterhalb der randseitigen unteren Außenfläche 6 des Trailers bzw. Unterflächenkonturdefiniereinrichtung befindet, ein mittleres Höhensignal $h = h_1$ zu erwarten sein, ab dem Zeitpunkt $t_2$, ab dem sich der Abstandssensor 14 unterhalb des Längsträgers 2 befindet, ein mittleres Höhensignal $h = h_2$ zu erwarten sein und ab dem Zeitpunkt $t_3$, ab dem sich der Abstandssensor 14 unterhalb der mittleren unteren Außenfläche 8 des Trailers befindet, ein mittleres Höhensignal $h = h_3$ zu erwarten sein. Der zweite Abstandsensor liefert ebenfalls ein Höhenprofil, das auch zu Kontrollzwecken genutzt werden kann.

Aus den ermittelten Zeitpunkten $t_1$, $t_2$, $t_3$, ab denen das Höhensignal jeweils einen neuen Wert annimmt, den bekannten Breiten der Außenfläche 6 bzw. Unterflächenkonturdefiniereinrichtung, des Längsträgers 2 und der Außenfläche 8 und der bekannten aktuellen Geschwindigkeit der Hublafette 10 kann mittels der Meßwertverarbeitung 15 unmittelbar die genaue Position der Hublafette relativ zum Trauer 1 als Funktion der Zeit t bestimmt werden.

Durch unmittelbaren Vergleich der aktuell erhaltenen Kurve h(t) mit den zu erwartenden Mittelwerten $h_1$, $h_2$, $h_3$ und Längen der einzelnen Zeitabschnitte $t_1<t<t_2$ und $t_2<t<t_3$ ist eine Fehlinterpretation der erhaltenen Meßergebnisse ausgeschlossen. Während der Messung aufgetretene Fehlechos werden erkannt und können unterdrückt werden. Die Wahrscheinlichkeit, unter Einbeziehung von fremden Gegeständen eine Meßkurve mit der charakteristischen Ausprägung der Eckpunkte $t_1$, $h_1$; $t_2$, $h_2$; $t_3$, $h_3$ zu erhalten, ist vernachlässigbar gering.

Außer der vorstehend erläuterten typischen Ausbildung der randseitigen unteren Außenfläche 6 und/oder des Längsträgers 2 und/oder der mittleren unteren Außenfläche 8 können sich weitere spezifische Höhenwerte einstellen, die ein sicheres Erkennen der richtigen Position der Hublafette ermöglichen.

Weiterhin können mit Hilfe der Abstandssensoren 13, 14 durch bewußte Gestaltung des Unterbodens des Trailers 1 insbesondere im Bereich der randseitigen unteren Außenfläche 6 zusätzliche Informationen an die Hublafette 10 übertragen werden. Es sind beispielsweise rechteckförmige Erhöhungen bzw. Nuten in der randseitigen unteren Außenfläche 6 einbringbar, welche ein signifikantes digitales Muster der erhaltenen Kurve h(t) zwischen den Zeitpunkten $t_1$ und $t_2$ erzeugen. Dieses digitale Muster kann der Meßwertverarbeitung 15 der Hublafette 10 und damit dem übergeordneten Rechnersystem des automatischen Verladungssystems wichtige Informationen hinsichtlich des positionierten Trailers übermitteln, beispielsweise hinsichtlich des Typs des Trailers, des Eigentümers, der Nummer des Trailers oder des Transportes, des Trailer-Leergewichtes, der Hilfsanschlüsse (beispielsweise Kühlcontainer mit besonderen elektrischen Anschlüssen) oder der Klassifizierung des Trailer-Inhaltes (Gefahrenklasse, besondere Vorschriften). Auf diese Art und Weise ist beispielsweise in einfacher Weise eine sichere Identifizierung des Trailers möglich.

Bezugszeichenliste

| | |
|---|---|
| 1 | Trailer |
| 2 | Längsträger |
| 3 | Längsträger |
| 4 | Reifen des Trailers |
| 5 | Reifen des Trailers |
| 6 | randseitige untere Außenfläche des Trailers bzw. Trailerunterflächenkonturdefiniervorrichtung |
| 7 | randseitige untere Außenfläche des Trailers bzw. Trailerunterflächenkonturdefiniervorrichtung |
| 8 | mittlere untere Außenfläche des Trailers |
| 9 | - |
| 10 | Hublafette |
| 11 | Traverse |
| 12 | Hubzylinder |
| 13 | Abstandssensor |
| 14 | Abstandssensor |
| 15 | Meßwertverarbeitung |
| 16 | Kette |
| 17 | Kettenräder |
| 18 | Tragräder |
| 20 | befahrener Grund |
| 30 | Schienenanlage |
| 40 | Schienenwaggon |
| h | Höhensignal |
| $h_1$ | Höhensignal entspr. dem Abstand zur randseitigen unteren Außenfläche bzw. Trailerunterflächenkonturdefiniervorrichtung |
| $h_2$ | Höhensignal entsprechend dem Abstand zur Unterfläche des Längsträgers |
| $h_3$ | Höhensignal entsprechend dem Abstand zur mittleren unteren Außenfläche |
| t | Zeit |
| $t_1$ | Zeitpunkt, bei dem der Abstandssens. die randseit. untere Außenfläche bzw. Trailerunterflächenkonturdefiniervorrichtung erfaßt |
| $t_2$ | Zeitpunkt, bei dem der Abstandssens. die Unterfläche des Längstr. erfaßt |
| $t_3$ | Zeitpunkt, bei dem der Abstandssens. die mittlere untere Außenfläche erfaßt |

**Patentansprüche**

1. Verfahren zur Positionerung einer Hublafette unter einem Trauer, dadurch gekennzeichnet, daß zur Erkennung der aktuellen horizontalen Position der Hublafette (10) relativ zum Trailer (1) der zeitliche Verlauf des vertikalen Abstandes zwischen mindestens einem auf der Hublafette montierten, waagerecht selektiert abtastenden Abstandssensor (13, 14) und dem nach unten gerichteten Außenflächenprofil des Trailers unter Beachtung der bekannten Dimensionierung des Außenflächenprofils sowie der aktuellen Geschwindigkeit der Hublafette (10) herangezogen wird.

2. Verfahren nach Anspruch 1, dadurch gekennzeichnet, daß der zeitliche Verlauf des erfaßten vertikalen Abstandes mit vorgegebenen Erwartungswerten verglichen wird.

3. Verfahren nach Anspruch 1 und/oder 2, dadurch gekennzeichnet, daß der zeitliche Verlauf des vertikalen Abstandes zusätzliche Informationen hinsichtlich des Typs des Trailers und/oder Identifizierungsangaben und/oder des Inhalts des Trailers beinhaltet.

4. Trailer für den kombinierten Verkehr von Schienenwaggons und LKW-Anhängern, dadurch gekennzeichnet, daß das nach unten gerichtete Außenflächenprofil des Trailers zumindest teilweise mit signifikanten Erhebungen und/oder Nuten versehen ist, welche durch unterschiedliche vertikale Profilierung eine Erkennung der horizontalen Position einer unter dem Trailer zu positionierenden Hublafette (10) relativ zum Trailer (1) ermöglicht.

5. Trailer nach Anspruch 4, dadurch gekennzeichnet, daß sein nach unten gerichtetes Außenflächenprofil zumindest teilweise mit zusätzlichen Erhebungen und/oder Nuten versehen ist, welche durch unterschiedliche vertikale Profilierung zusätzliche Informationen hinsichtlich des Typs des Trailers und/oder Identifizierungsangaben und/oder des Inhalts des Trailers beinhalten.

6. Trailer nach Anspruch 4 oder 5, dadurch gekennzeichnet, daß das nach unten gerichtete Außenprofil als ein- oder mehrstückiges Zusatzbauteil am Trailer vorgesehen ist.

Fig. 1

EP 1 063 142 A1

Fig. 2

Fig. 3

**Europäisches Patentamt**

# EUROPÄISCHER RECHERCHENBERICHT

Nummer der Anmeldung

EP 00 11 2342

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 885 794 A (KOELKER CARL WILHELM ;THIELE BERND (DE)) 23. Dezember 1998 (1998-12-23) * Spalte 5, Zeile 57 - Spalte 7, Zeile 15; Abbildungen 1-6 * | 1,4 | B61D47/00 B60P1/64 B65G67/02 |
| A | DE 197 17 661 A (KRUPP FOERDERTECHNIK GMBH) 29. Oktober 1998 (1998-10-29) * Spalte 3, Zeile 38 - Zeile 62; Abbildungen 1-4 * | 1 | |
| A | DE 195 03 198 C (NOELL GMBH) 22. Februar 1996 (1996-02-22) * Spalte 3, Zeile 58 - Spalte 5, Zeile 2; Abbildungen 1-3 * | 1,4 | |

| RECHERCHIERTE SACHGEBIETE (Int.Cl.7) |
|---|
| B61D B61J B60P B65G B61K G01B |

Der vorliegende Recherchenbericht wurde für alle Patentansprüche erstellt

| Recherchenort | Abschlußdatum der Recherche | Prüfer |
|---|---|---|
| DEN HAAG | 28. September 2000 | Chlosta, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 11 2342

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2000

| Im Recherchenbericht angeführtes Patentdokument | | Datum der Veröffentlichung | Mitglied(er) der Patentfamilie | | Datum der Veröffentlichung |
|---|---|---|---|---|---|
| EP 0885794 | A | 23-12-1998 | AU 8938498 A | | 04-01-1999 |
| | | | WO 9858828 A | | 30-12-1998 |
| | | | NO 996197 A | | 04-02-2000 |
| DE 19717661 | A | 29-10-1998 | KEINE | | |
| DE 19503198 | C | 22-02-1996 | KEINE | | |

Für nähere Einzelheiten zu diesem Anhang : siehe Amtsblatt des Europäischen Patentamts, Nr.12/82